# EUROPÄISCHE PATENTSCHRIFT

(11) **EP 3 850 836 B1**
(45) Veröffentlichungstag und Bekanntmachung des Hinweises auf die Patenterteilung: **05.04.2023**
(21) Anmeldenummer: 19752434.1
(22) Anmeldetag: 30.07.2019
(51) Int. Cl.: H04N 17/00, H04N 5/247, G06T 7/80

(54) **VERFAHREN ZUR KALIBRIERUNG EINES ERFASSUNGSSYSTEMS**
METHOD FOR CALIBRATING A CAPTURE SYSTEM
PROCÉDÉ D'ÉTALONNAGE D'UN SYSTÈME DE DÉTECTION

(30) Priorität: 12.09.2018 DE 102018215491
(43) Veröffentlichungstag der Anmeldung: 21.07.2021
(73) Patentinhaber: Robert Bosch GmbH, 70442 Stuttgart (DE)
(72) Erfinder: JACHALSKY, Joern, 30974 Wennigsen (DE); WRIGHT, Corinna, 27321 Thedinghausen (DE); GIGENGACK, Fabian, 30173 Hannover (DE)
(86) Internationale Anmeldenummer: PCT/EP2019/070422
(87) Internationale Veröffentlichungsnummer: WO 2020/052853

(56) Entgegenhaltungen:
- EP-A1- 3 301 646
- DE-A1-102008 046 545
- DE-A1-102013 021 408

## Beschreibung

### Technisches Gebiet

Die Erfindung betrifft ein Verfahren zur Kalibrierung eines Erfassungssystems, wobei das Erfassungssystem zumindest eine bewegbare Erfassungseinrichtung umfasst.

Die Erfindung betrifft weiter ein Erfassungssystem, umfassend zumindest eine bewegbare Erfassungseinrichtung.

Obwohl die vorliegende Erfindung allgemein auf beliebige Erfassungseinrichtungen anwendbar ist, wird die vorliegende Erfindung in Bezug auf Erfassungssysteme mit Kameras als Erfassungseinrichtungen beschrieben.

Obwohl die vorliegende Erfindung allgemein auf beliebige Erfassungssysteme anwendbar ist, wird die vorliegende Erfindung in Bezug auf Erfassungssysteme in Flurfördergeräten beschrieben.

### Stand der Technik

Mehrkamerasysteme finden im Automotive-Bereich eine breite Anwendung. Sie bilden beispielsweise die Grundlage für Surround-View-Anwendungen, wie etwa dem Einparkassistenten. Neuerdings halten diese Mehrkamerasysteme auch Einzug in den Bereich der Flurförderzeuge, beispielsweise Gabelstapler. Dort sollen sie, ähnlich wie im PKW, zur visuellen Unterstützung des Fahrers dienen oder auch Assistenzfunktionen, beispielsweise eine Warnung vor möglichen Kollisionen, anbieten. Bei den bekannten Mehrkamerasystemen bedarf es einer akkuraten extrinsischen Kalibrierung der einzelnen Kameras zueinander, um Informationen zwischen den Kameras miteinander in Verbindung setzen zu können. Möchte man beispielweise Informationen zwischen einer nach vorne schauenden Kamera und einer zur Seite schauenden Kamera austauschen, muss für die Kalibrierung der Kameras die räumliche Lage der Kameras im dreidimensionalen Raum zueinander bestimmt werden. Hierzu werden beispielsweise Kalibriertafeln verwendet. Die Kalibriertafeln enthalten ein bekanntes Muster mit bekannten metrischen Abständen, beispielsweise Schachbrettmuster. Jede Tafel ist außerdem von mindestens zwei Kameras aus sichtbar. Dadurch können dreidimensionale Punkte trianguliert werden, die es wiederum erlauben, die dreidimensionale Lage der Kameras in der Welt zueinander zu ermitteln.

Das bekannte Kalibrierungsverfahren erfordert allerdings ein starres Kamera-System.

Das bedeutet, dass alle Kameras relativ zueinander unbeweglich sind. Diese Annahme ist beispielsweise bei Mehrkamerasystemen für Gabelstapler, zum Beispiel bei einem Gegengewichtsstapler verletzt, wenn die nach vorne gerichtete Kamera am Mast befestigt ist. Diese Kamerapositionierung wird unter anderem gewählt, da sonst der Mast die Sicht der Kamera versperren würde. Der Mast aber lässt sich nach vorne kippen, um eine Last aufzunehmen. Dadurch ändert sich die relative Lage der Kamera am Mast zu den übrigen Kameras und die vorher bestimmte Kalibrierung des Mehrkamerasystems ist nicht mehr gültig.

Aus der US 2017/0287169 A1 ist ein Verfahren zur extrinsischen Kalibrierung eines Kamerasystems bekannt geworden, umfassend zwei Kameras für ein motorbetriebenes Fahrzeug. Äußere Störeinflüsse, zum Beispiel mechanische Vibrationen, führen zu Veränderungen der Orientierung beider Kameras relativ zueinander, so dass sich eine Abweichung von einer initial durchgeführten Kalibrierung ergibt. Ausgehend von der initialen Kalibrierung ist eine iterative Rekalibrierung der Gierachse der Kameras vorgesehen. Die Rekalibrierung findet auf Grundlage von Bildaufnahmen beider Kameras derselben Szenerie statt, die mittels eines Bildverarbeitungsverfahrens miteinander verglichen werden.

Aus der EP 3301646 A1 ist ein Verfahren zur Kalibrierung eines Erfassungssystems bekannt geworden, wobei das Erfassungssystem zumindest eine bewegbare Erfassungseinrichtung umfasst, umfassend die Schritte
- Ermitteln von zumindest zwei möglichen unterschiedlichen Posen der zumindest einen bewegbaren Erfassungseinrichtung,
- Vorabkalibrieren der zumindest einen bewegbaren Erfassungseinrichtung anhand einer der zumindest zwei möglichen Posen,
- Bereitstellen von Vorabkalibrierinformationen für die zumindest eine der möglichen Posen,
- Ermitteln einer aktuellen Pose der zumindest einen bewegbaren Erfassungseinrichtung,
- Ermitteln von Kalibrierinformationen für die aktuelle Pose basierend auf den Vorabkalibrierinformationen, und
- Kalibrieren der zumindest einen bewegbaren Erfassungseinrichtung in der aktuellen Pose anhand der bereitgestellten Kalibrierinformationen.

Aus der DE 10 2008 046545 A1 ist ein Verfahren zur Kalibrierung einer Anordnung zur Überwachung einer Umgebung eines Fahrzeugs bekannt geworden, wobei die Umgebung anhand von mehreren Bilderfassungseinheiten, deren Erfassungsbereiche sich zumindest teilweise überlappen und einen Überlappungsbereich bilden, erfasst wird, wobei aus mittels der Bilderfassungseinheiten erfassten Einzelbildern anhand einer Bildverarbeitungseinheit ein Gesamtbild erzeugt wird, welches das Fahrzeug und dessen Umgebung aus einer Vogelperspektive zeigt, wobei die Bilderfassungseinheiten mittels markanter Punkte und/oder Kanten am Fahrzeug kalibriert werden, indem Positionen und/oder Verläufe dieser markanten Punkte und/oder Kanten in einem aktuellen Bildausschnitt der jeweiligen Bilderfassungseinheit mit Positionen und/oder Verläufen dieser markanten Punkte und/oder Kanten in einem Modellbild verglichen werden; oder eine Mehrzahl von Bilderfassungseinheiten mittels markanter Punkte und/oder Linien auf einer Fahrbahn kalibriert werden, welche von dieser Mehrzahl Bilderfassungseinheiten erfasst werden.

### Offenbarung der Erfindung

In einer Ausführungsform stellt die Erfindung ein Verfahren zur Kalibrierung eines Erfassungssystems gemäß Anspruch 1 bereit. Weitere vorteilhafte Ausführungsformen sind in den abhängigen Ansprüchen 2 bis 9 angegeben.

In einer weiteren Ausführungsform stellt die Erfindung ein Erfassungssystem gemäss Anspruch 10 bereit.

Der Begriff "Pose" ist im weitesten Sinne zu verstehen und bezieht sich insbesondere in den Ansprüchen, vorzugsweise in der Beschreibung auf zumindest eine Koordinate, Information, Daten oder dergleichen für eine Position und/oder Orientierung eines Gegenstands.

Einer der damit erzielten Vorteile ist, dass eine Bestimmung der Pose von beweglichen Erfassungseinrichtungen jederzeit möglich ist. Darüber hinaus wird die Flexibilität erhöht, da eine zuverlässige und einfache Kalibrierung von beliebigen Erfassungssystemen mit mehreren Erfassungseinrichtungen möglich ist.

Weitere Merkmale, Vorteile und weitere Ausführungsformen der Erfindung sind im Folgenden beschrieben oder werden dadurch offenbar.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt
- Figur 1: in schematischer Form ein Verfahren gemäß einer Ausführungsform der vorliegenden Erfindung;
- Figur 2: in schematischer Form ein Erfassungssystem auf einem Flurförderzeug gemäß einer Ausführungsform der vorliegenden Erfindung; und
- Figur 3: in schematischer Form eine Draufsicht des Erfassungssystems gemäß Figur 2.

### Ausführungsformen der Erfindung

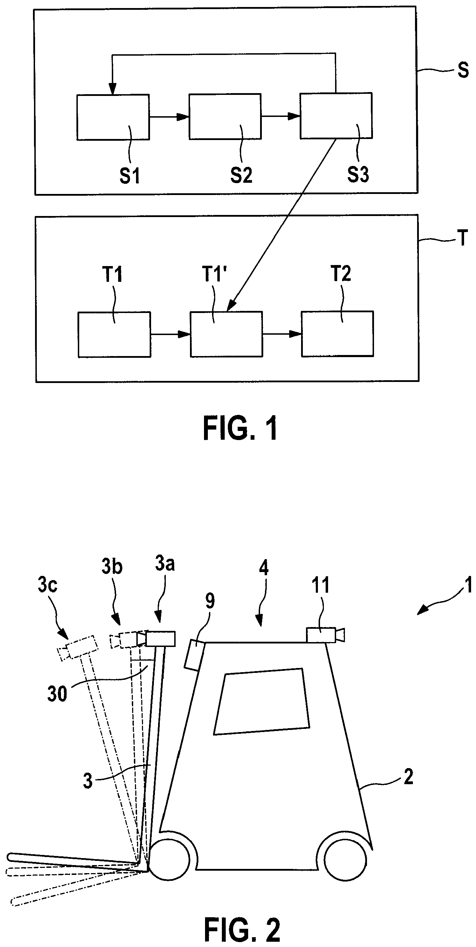

Figur 1 zeigt in schematischer Form ein Verfahren gemäß einer Ausführungsform der vorliegenden Erfindung.

Im Detail umfasst das Verfahren eine Offline-Phase S und eine Online-Phase T. In der Offline-Phase S wird/werden zuerst die Pose(n) - unter dem Begriff "Pose" ist hier Position und Orientierung zu verstehen - einer beweglich angeordneten Erfassungseinrichtung eingestellt (Schritt S1). Anschließend wird ein Kalibriervorgang gestartet (Schritt S2). Als Ausgabe erhält man das Kalibrierergebnis (Schritt S3), das in Form von Transformationsmatrizen vorliegen kann. Die Schritte S1-S3 werden solange wiederholt, bis mit Schritt S1 das komplette benötigte Bewegungsspektrum von Erfassungseinrichtungen, beispielsweise Kameras, abgedeckt ist. In der Online-Phase T wird die Pose der beweglich angeordneten Erfassungseinrichtung ermittelt (Schritt T1) und im Anschluss die hierzu passende Kalibrierung aus den offline, beziehungsweise vorab ermittelten Kalibrierergebnissen (Schritt S3) berechnet (Schritt T1'). Im Schritt T2 wird dann die Kamera mit den berechneten Kalibrierinformationen kalibriert.

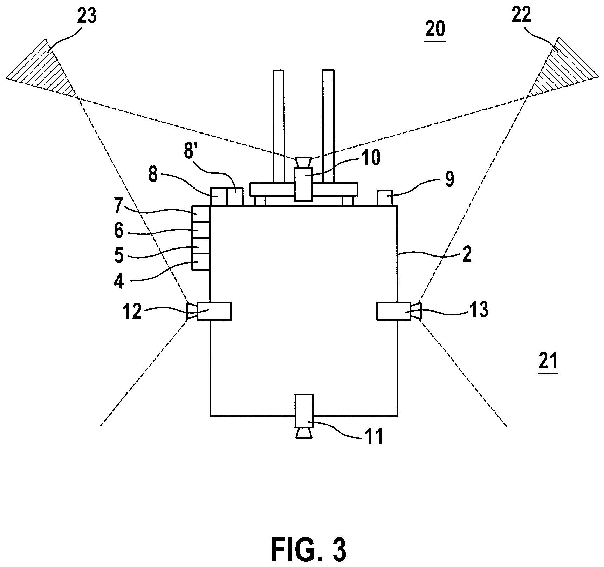

Figur 2 zeigt in schematischer Form ein Erfassungssystem auf einem Flurförderzeug gemäß einer Ausführungsform der vorliegenden Erfindung und Figur 3 zeigt in schematischer Form eine Draufsicht des Erfassungssystems gemäß Figur 2.

Im Detail ist in den Figuren 2 und 3 ein Gabelstapler 2 gezeigt, der einen bewegbaren Mast 3 aufweist. An dem bewegbaren Mast 3 ist ein Erfassungssystem 1 mit einer Kamera 10 gezeigt, die an diesem fest installiert angeordnet ist. Durch eine Bewegung des Mastes 3 kann also die Kamera 10 bewegt werden. Die Kamera 10 zeigt hierbei nach vorne. Weiterhin ist auf dem Dach 4 des Gabelstaplers 2 eine weitere Kamera 11 fest angeordnet, deren Erfassungsbereich rückwärts gewandt ist.

Der Mast 3 des Gabelstaplers 2 kann - hier angenommen - nur definierte Bewegungen vollführen. Im Folgenden wird weiter ausschließlich eine Bewegung in Form einer Rotation des Mastes 3 um einen Rotationspunkt angenommen, wie dies in Figur 2 schematisch gezeigt ist. In der in den Figuren 2 und 3 gezeigten Ausführungsform wird zum einen eine übliche Bewegung der Kamera 10 modelliert und zum anderen die Kamera 10 für mehrere Posen 3a, 3b, 3c, in diesem Fall für mehrere Neigungswinkel/Rotationswinkel 30 des Mastes 3, kalibriert, um dann zwischen diesen Kalibrierungen interpolieren zu können. Dabei werden die mehrfachen Kalibrierungen einmalig im Vorfeld durchgeführt. Zur Laufzeit, also beim späteren bestimmungsgemäßen Betrieb des Gabelstaplers 2, sind sie daher bekannt und werden dann abgerufen.

Die Bewegung der Kamera 10 kann über die Bewegung des Mastes 3 modelliert werden. Dafür muss einerseits die relative Lage der Kamera 10 zum Mast 3, also Abstand und Ausrichtung, bekannt sein und andererseits der Rotationspunkt des Mastes 3 und der Rotationswinkel 30, um den rotiert wird. Dann wird die Pose der Kamera 10 um eine Transformationsmatrix, die die Transformation der Kamera 10 bedingt durch die Rotation des Mastes 3 beschreibt, erweitert. Es können hierbei zwei Fälle unterschieden werden:
A) Der Rotationswinkel des Mastes 3 kann messtechnisch bestimmt werden und ist bekannt. So könnte er zum Beispiel als Signal auf einem CAN-Bus anliegen und vom Erfassungssystem 1 ausgelesen werden. In diesem Fall kann er daher als bekannt angenommen werden.
B) Der Rotationswinkel 30 wird messtechnisch nicht bestimmt und ist daher unbekannt. Hier können dann zwei Varianten unterschieden werden:
   B1) Der Rotationswinkel wird nicht bestimmt und die passende Kalibrierung, wie weiter unten beschrieben, wird anderweitig ermittelt.
   B2) Der Rotationswinkel 30 wird im laufenden Betrieb bestimmt, zum Beispiel über gemeinsame Merkmale mit einer benachbarten starren Kamera und es wird wie in Fall A) weiter verfahren.

Die zur Modellierung außerdem benötigte relative Lage der Kamera 10 zum Mast 3 kann bei der Kalibrierung in der Offline-Phase S vorab mitbestimmt werden.

Je nach Stärke der Rotation des Mastes 3 kann die Schätzung der Pose beziehungsweise der relativen Lage der Kamera 10 im Erfassungssystem 1, trotz Modellierung der Bewegung, entsprechend ungenau werden. Außerdem kann die theoretische Annahme einer Bewegung der Kamera 10 auf einer perfekten Kreisbahn in der Praxis, etwa durch mechanische Vorgänge, verletzt sein. Hier können dann mehrfache Kalibriervorgänge für verschiedene Rotationswinkel 30 durchgeführt werden. Je nach gewünschter Genauigkeit kann dies für eine bestimmte Anzahl von Rotationswinkeln durchgeführt werden, zum Beispiel ein Kalibriervorgang pro ein Grad Rotationswinkel. Es werden also mehrere Kalibriervorgänge für definierte Rotationswinkel 30 durchgeführt. Für den oben beschriebenen Fall A), bei dem der Rotationswinkel 30 dem Erfassungssystem 1 bekannt ist, kann nun zwischen diesen Stützstellen - erhalten durch die Pose der Kamera 10 für verschiedene Rotationswinkel 30 - an denen jeweils eine Kalibrierung durchgeführt wurde, gemäß der modellierten Bewegung, etwa entlang der Geodäte, zwischen diese auch für Zwischenposen eine Kalibrierung durch Interpolation ermittelt werden. Dies erhöht die Genauigkeit, da die Fehlerausbreitung der Posenschätzung der Kamera 10 durch zusätzliche Messungen an den Stützstellen verhindert wird.

In einer weiteren Ausführungsform wird auf die Interpolation verzichtet und es wird nur die Kalibrierung gewählt, die dem Rotationswinkel 30 des Mastes 3 am nächsten kommt. Dann kann auch auf eine Modellierung der Bewegung verzichtet werden.

Mit Bezug auf die Figuren 2 und 3 kann für die Kameraposition 3a eine erste Kalibrierung und für die Kameraposition 3c eine zweite Kalibrierung durchgeführt werden. Für sämtliche Zwischenpositionen 3b kann dann zwischen diesen beiden Kalibrierungen entlang der modellierten Bewegung, etwa der Geodäte, interpoliert werden. Für Kamerapositionen nahe der Kameraposition 3b wird durch dieses Verfahren eine verbesserte Posenschätzung ermöglicht als wenn man nur eine Kalibrierung (für die Kameraposition 3a) vorliegen hätte.

Für den Fall B1), bei dem der Rotationswinkel 30 nicht bekannt ist, muss auf anderem Wege bestimmt werden, welche der vorberechneten Kalibrierungen ausgewählt werden soll. In dem gezeigten Erfassungssystem 1 mit vier Kameras 10, 11, 12, 13, bei dem zwei Kameras 12, 13 zu den Seiten zeigen, können in den Überlappbereichen 22, 23 der Front 10- und der Seitenkameras 12, 13 Korrespondenzen bestimmt werden.

Diese Korrespondenzen lassen sich dann dazu verwenden, die für den tatsächlichen Rotationswinkel 30 plausibelste Kalibrierungsinformationen aus der Menge der vorberechneten Kalibrierungsinformationen auszuwählen. Dies entspricht dann dem genannten Fall A).

Um das Ergebnis zu verbessern, können in einer weiteren Ausführungsform die Front-10 und die Seitenkameras 12, 13 auch in zwei Gruppen, beispielsweise Front- und linke Seitenkamera 10, 12 bilden eine Gruppe und Front- und rechte Seitenkamera 10, 13 bilden die andere Gruppe, eingeteilt werden, um zwei voneinander unabhängige Bestimmungen der zum tatsächlichen Rotationswinkel 30 passenden Kalibrierung zu erhalten. In einer weiteren Ausführungsform kann auch von der Online-Kalibrierung (Schritte S1-S3) genutzt werden.

Zusammenfassend weist zumindest eine der Ausführungsformen der Erfindung zumindest einen der folgenden Vorteile auf:
- Genauere Kalibrierung.
- Höhere Flexibilität, sowohl in Anwendungsbereichen als auch bei den Erfassungssystemen.
- Einfachere und zuverlässigere Kalibrierung.

Obwohl die vorliegende Erfindung anhand bevorzugter Ausführungsbeispiele beschrieben wurde, ist sie nicht darauf beschränkt, sondern auf vielfältige Weise gemäss den beigefügten Ansprüchen modifizierbar.

## Patentansprüche

1. Verfahren zur Kalibrierung eines Erfassungssystems (4), wobei das Erfassungssystem (4) zumindest eine bewegbare Erfassungseinrichtung (10, 11, 12, 13) umfasst, umfassend die Schritte
- Ermitteln (S1) von zumindest zwei möglichen unterschiedlichen Posen der zumindest einen bewegbaren Erfassungseinrichtung (10, 11, 12, 13),
- Vorabkalibrieren (S2) der zumindest einen bewegbaren Erfassungseinrichtung (10, 11, 12, 13) anhand jeder der zumindest zwei möglichen Posen (3a, 3c), wobei das Vorabkalibrieren der zumindest einen bewegbaren Erfassungseinrichtung (10, 11, 12, 13) anhand zumindest einer Zwischenpose (3b) zwischen den zumindest zwei möglichen Posen (3a, 3c) erfolgt,
- Bereitstellen (S3) von Vorabkalibrierinformationen für die zumindest zwei möglichen Posen,
- Ermitteln (T1) einer aktuellen Pose der zumindest einen bewegbaren Erfassungseinrichtung (10, 11, 12, 13),
- Ermitteln (T1') von Kalibrierinformationen für die aktuelle Pose basierend auf den Vorabkalibrierinformationen, und
- Kalibrieren (T2) der zumindest einen bewegbaren Erfassungseinrichtung (10, 11, 12, 13) in der aktuellen Pose anhand der bereitgestellten Kalibrierinformationen.

2. Verfahren gemäß Anspruch 1, wobei zum Ermitteln möglicher Posen (3a, 3c) der zumindest einen bewegbaren Erfassungseinrichtung (10, 11, 12, 13) eine Bewegung der bewegbaren Erfassungseinrichtung (10, 11, 12, 13) modelliert wird.

3. Verfahren gemäß einem der vorhergehenden Ansprüche, wobei die zumindest eine Zwischenpose (3b) zwischen den zumindest zwei möglichen Posen (3a, 3c) basierend auf einem vorgegebenen Verbindungsstreckenmodell ermittelt wird.

4. Verfahren gemäß Anspruch 3, wobei die zumindest eine Zwischenpose (3b) mittels des Verbindungsstreckenmodells in Form einer geodätischen Linie zwischen den zumindest zwei möglichen Posen (3a, 3c) ermittelt wird.

5. Verfahren gemäß einem der vorhergehenden Ansprüche, wobei die aktuelle Pose der zumindest einen bewegbaren Erfassungseinrichtung (10, 11, 12, 13) von dieser selbst ermittelt wird oder Lageinformationen für die zumindest eine bewegbare Erfassungseinrichtung (10, 11, 12, 13) von einer externen Sensoreinrichtung (9) bereitgestellt werden.

6. Verfahren gemäß einem der vorhergehenden Ansprüche, wobei das Kalibrieren der zumindest einen bewegbaren Erfassungseinrichtung (10, 11, 12, 13) in der aktuellen Lage anhand von Vorabkalibrierinformationen einer der aktuellen Pose nächstkommenden Pose erfolgt.

7. Verfahren gemäß einem der vorhergehenden Ansprüche, wobei das Kalibrieren der zumindest einen bewegbaren Erfassungseinrichtung (10, 11, 12, 13) in der aktuellen Pose anhand einer Interpolation basierend auf den Vorabkalibrierinformationen erfolgt.

8. Verfahren gemäß einem der vorhergehenden Ansprüche, wobei eine Mehrzahl von Erfassungseinrichtungen (10, 11, 12, 13) angeordnet ist, von denen zumindest eine bewegbar angeordnet ist und wobei sich Erfassungsbereiche (20, 21) zumindest zweier Erfassungseinrichtungen (10, 11, 12, 13) in zumindest einem Überlappungsbereich (22, 23) überlappen, und wobei Kalibrierinformationen für zumindest eine Erfassungseinrichtung (10, 11, 12, 13) bereitgestellt sind, und wobei Korrespondenzen anhand des zumindest einen Überlappungsbereichs (22, 23) ermittelt werden, und wobei anhand der ermittelten Korrespondenzen Kalibrierinformationen zum Kalibrieren der zumindest einen bewegbaren Erfassungseinrichtung (10, 11, 12, 13) in der aktuellen Pose bereitgestellt werden.

9. Verfahren gemäß einem der vorhergehenden Ansprüche wobei eine Mehrzahl von Erfassungseinrichtungen (10, 11, 12, 13) angeordnet ist von denen zumindest eine bewegbar angeordnet ist, und wobei die Erfassungseinrichtungen (10, 11, 12, 13) in zumindest zwei Gruppen unterteilt werden und wobei anhand der gebildeten Gruppen Kalibrierinformationen zum Kalibrieren der zumindest einen bewegbaren Erfassungseinrichtung in der aktuellen Pose bereitgestellt werden.

10. Erfassungssystem, umfassend
zumindest eine bewegbare Erfassungseinrichtung (10, 11, 12, 13),
eine erste Ermittlungseinrichtung (8) ausgebildet zum Ermitteln von zumindest zwei möglichen unterschiedlichen Posen (3a, 3c) der zumindest einen bewegbaren Erfassungseinrichtung (10, 11, 12, 13),
eine Vorabkalibiereinrichtung (7) ausgebildet zum Vorabkalibrieren der zumindest einen bewegbaren Erfassungseinrichtung (10, 11, 12, 13) anhand jeder der zumindest zwei möglichen Posen (3a, 3c), wobei das Vorabkalibrieren der zumindest einen bewegbaren Erfassungseinrichtung (10, 11, 12, 13) anhand zumindest einer Zwischenpose (3b) zwischen den zumindest zwei möglichen Posen (3a, 3c) erfolgt,
eine Bereitstellungseinrichtung (6) ausgebildet zum Bereitstellen von Vorabkalibrierinformationen für die zumindest zwei möglichen Posen (3a, 3c),
eine Poseeinrichtung (5) ausgebildet zum Ermitteln einer aktuellen Pose der zumindest einen bewegbaren Erfassungseinrichtung (10, 11, 12, 13),
eine zweite Ermittlungseinrichtung (8') ausgebildet zum Ermitteln von Kalibrierinformationen für die aktuelle Pose basierend auf Vorabkalibrierinformationen, und
eine Kalibriereinrichtung (4) ausgebildet zum Kalibrieren der zumindest einen bewegbaren Erfassungseinrichtung (10, 11, 12, 13) in der aktuellen Pose anhand der bereitgestellten Kalibrierinformationen.

## Claims

1. Method for calibrating a capture system (4), wherein the capture system (4) comprises at least one movable capture device (10, 11, 12, 13), comprising the steps of
- determining (S1) at least two possible different poses of the at least one movable capture device (10, 11, 12, 13),
- pre-calibrating (S2) the at least one movable capture device (10, 11, 12, 13) on the basis of each of the at least two possible poses (3a, 3c), wherein the at least one movable capture device (10, 11, 12, 13) is pre-calibrated on the basis of at least one intermediate pose (3b) between the at least two possible poses (3a, 3c),
- providing (S3) pre-calibration information for the at least two possible poses,
- determining (T1) a current pose of the at least one movable capture device (10, 11, 12, 13),
- determining (T1') calibration information for the current pose on the basis of the pre-calibration information, and
- calibrating (T2) the at least one movable capture device (10, 11, 12, 13) in the current pose on the basis of the calibration information provided.

2. Method according to Claim 1, wherein, in order to determine possible poses (3a, 3c) of the at least one movable capture device (10, 11, 12, 13), a movement of the movable capture device (10, 11, 12, 13) is modelled.

3. Method according to one of the preceding claims, wherein the at least one intermediate pose (3b) between the at least two possible poses (3a, 3c) is determined on the basis of a predefined connecting path model.

4. Method according to Claim 3, wherein the at least one intermediate pose (3b) is determined by means of the connecting path model in the form of a geodetic line between the at least two possible poses (3a, 3c).

5. Method according to one of the preceding claims, wherein the current pose of the at least one movable capture device (10, 11, 12, 13) is determined by the latter itself or position information for the at least one movable capture device (10, 11, 12, 13) is provided by an external sensor device (9).

6. Method according to one of the preceding claims, wherein the at least one movable capture device (10, 11, 12, 13) is calibrated in the current position on the basis of pre-calibration information relating to a pose closest to the current pose.

7. Method according to one of the preceding claims, wherein the at least one movable capture device (10, 11, 12, 13) is calibrated in the current pose on the basis of an interpolation based on the pre-calibration information.

8. Method according to one of the preceding claims, wherein a plurality of capture devices (10, 11, 12, 13) are arranged, at least one of which is movably arranged, and wherein capture regions (20, 21) of at least two capture devices (10, 11, 12, 13) overlap in at least one overlapping region (22, 23), and wherein calibration information is provided for at least one capture device (10, 11, 12, 13), and wherein correspondences are determined on the basis of the at least one overlapping region (22, 23), and wherein calibration information for calibrating the at least one movable capture device (10, 11, 12, 13) in the current pose is provided on the basis of the determined correspondences.

9. Method according to one of the preceding claims, wherein a plurality of capture devices (10, 11, 12, 13) are arranged, at least one of which is movably arranged, and wherein the capture devices (10, 11, 12, 13) are subdivided into at least two groups, and wherein calibration information for calibrating the at least one movable capture device in the current pose is provided on the basis of the groups that are formed.

10. Capture system comprising
at least one movable capture device (10, 11, 12, 13), a first determination device (8) designed to determine at least two possible different poses (3a, 3c) of the at least one movable capture device (10, 11, 12, 13),
a pre-calibration device (7) designed to pre-calibrate the at least one movable capture device (10, 11, 12, 13) on the basis of each of the at least two possible poses (3a, 3c), wherein the at least one movable capture device (10, 11, 12, 13) is pre-calibrated on the basis of at least one intermediate pose (3b) between the at least two possible poses (3a, 3c),
a provision device (6) designed to provide pre-calibration information for the at least two possible poses (3a, 3c),
a pose device (5) designed to determine a current pose of the at least one movable capture device (10, 11, 12, 13),
a second determination device (8') designed to determine calibration information for the current pose based on pre-calibration information, and
a calibration device (4) designed to calibrate the at least one movable capture device (10, 11, 12, 13) in the current pose on the basis of the calibration information provided.

## Revendications

1. Procédé d'étalonnage d'un système de détection (4), le système de détection (4) comportant au moins un dispositif de détection mobile (10, 11, 12, 13), comprenant les étapes suivantes
- détermination (S1) d'au moins deux postures différentes possibles de l'au moins un dispositif de détection mobile (10, 11, 12, 13),
- pré-étalonnage (S2) de l'au moins un dispositif de détection mobile (10, 11, 12, 13) à l'aide de chacune des au moins deux postures possibles (3a, 3c), le pré-étalonnage de l'au moins un dispositif de détection mobile (10, 11, 12, 13) s'effectuant à l'aide d'au moins une posture intermédiaire (3b) entre les au moins deux postures possibles (3a, 3c),
- fourniture (S3) d'informations de pré-étalonnage pour les au moins deux postures possibles,
- détermination (T1) d'une posture actuelle de l'au moins un dispositif de détection mobile (10, 11, 12, 13),
- détermination (T1') d'informations d'étalonnage pour la posture actuelle en se basant sur les informations de pré-étalonnage, et
- étalonnage (T2) de l'au moins un dispositif de détection mobile (10, 11, 12, 13) dans la posture actuelle à l'aide des informations d'étalonnage fournies.

2. Procédé selon la revendication 1, un mouvement du dispositif de détection mobile (10, 11, 12, 13) étant modélisé en vue de déterminer des postures possibles (3a, 3c) de l'au moins un dispositif de détection mobile (10, 11, 12, 13).

3. Procédé selon l'une des revendications précédentes, l'au moins une posture intermédiaire (3b) entre les au moins deux postures possibles (3a, 3c) étant déterminée en se basant sur un modèle de tronçon de liaison prédéfini.

4. Procédé selon la revendication 3, l'au moins une posture intermédiaire (3b) étant déterminée au moyen du modèle de tronçon de liaison sous la forme d'une ligne géodésique entre les au moins deux postures possibles (3a, 3c) .

5. Procédé selon l'une des revendications précédentes, la posture actuelle de l'au moins un dispositif de détection mobile (10, 11, 12, 13) étant déterminée par lui-même ou des informations de position pour l'au moins un dispositif de détection mobile (10, 11, 12, 13) étant fournies par un dispositif capteur (9) externe.

6. Procédé selon l'une des revendications précédentes, l'étalonnage de l'au moins un dispositif de détection mobile (10, 11, 12, 13) dans la position actuelle s'effectuant à l'aide d'informations de pré-étalonnage d'une posture la plus proche de la posture actuelle.

7. Procédé selon l'une des revendications précédentes, l'étalonnage de l'au moins un dispositif de détection mobile (10, 11, 12, 13) dans la position actuelle s'effectuant à l'aide d'une interpolation basée sur les informations de pré-étalonnage.

8. Procédé selon l'une des revendications précédentes, une pluralité de dispositifs de détection (10, 11, 12, 13) étant montés, parmi lesquels au moins l'un est monté mobile et les zones de détection (20, 21) d'au moins deux dispositifs de détection (10, 11, 12, 13) se chevauchant dans au moins une zone de chevauchement (22, 23), et des informations d'étalonnage pour au moins un dispositif de détection (10, 11, 12, 13) étant fournies, et des correspondances étant déterminées à l'aide de l'au moins une zone de chevauchement (22, 23), et des informations d'étalonnage servant à l'étalonnage de l'au moins un dispositif de détection mobile (10, 11, 12, 13) dans la posture actuelle étant fournies à l'aide des correspondances déterminées.

9. Procédé selon l'une des revendications précédentes, une pluralité de dispositifs de détection (10, 11, 12, 13) étant montés, parmi lesquels au moins l'un est monté mobile, et les dispositifs de détection (10, 11, 12, 13) étant subdivisés en au moins deux groupes et des informations d'étalonnage servant à l'étalonnage de l'au moins un dispositif de détection mobile dans la posture actuelle étant fournies à l'aide des groupes formés.

10. Système de détection, comprenant
au moins un dispositif de détection mobile (10, 11, 12, 13),
un premier dispositif de détermination (8), configuré pour déterminer au moins deux postures (3a, 3c) différentes possibles de l'au moins un dispositif de détection mobile (10, 11, 12, 13),
un dispositif de pré-étalonnage (7), configuré pour pré-étalonner l'au moins un dispositif de détection mobile (10, 11, 12, 13) à l'aide de chacune des au moins deux postures possibles (3a, 3c), le pré-étalonnage de l'au moins un dispositif de détection mobile (10, 11, 12, 13) s'effectuant à l'aide d'au moins une posture intermédiaire (3b) entre les au moins deux postures possibles (3a, 3c),
un dispositif de fourniture (S3), configuré pour fournir des informations de pré-étalonnage pour les au moins deux postures (3a, 3c) possibles,
un dispositif de posture (5), configuré pour déterminer une posture actuelle de l'au moins un dispositif de détection mobile (10, 11, 12, 13),
un deuxième dispositif de détermination (8'), configuré pour déterminer des informations d'étalonnage pour la posture actuelle en se basant sur des informations de pré-étalonnage, et
un dispositif d'étalonnage (4), configuré pour étalonner l'au moins un dispositif de détection mobile (10, 11, 12, 13) dans la posture actuelle à l'aide des informations d'étalonnage fournies.
